# EUROPÄISCHE PATENTANMELDUNG

(11) **EP 1 496 586 A1**
(43) Veröffentlichungstag der Anmeldung: **12.01.2005**
(21) Anmeldenummer: 04014554.2
(22) Anmeldetag: 22.06.2004
(51) Int. Cl.: H02G 1/12

(54) **Zange mit einer Abisolierstation**

(30) Priorität: 05.07.2003 DE 20310377 U
(71) Anmelder: Weidmüller Interface GmbH & Co. KG, 32760 Detmold (DE)
(72) Erfinder: Hetland, Detlev, 32760 Detmold (DE); Hanning, Günther, 32758 Detmold (DE); Schmode, Hartmut, 23825 Blomberg (DE)
(74) Vertreter: Specht, Peter, Dipl.-Phys.

(57) **Zusammenfassung**

Zange (1) mit einer Abisolierstation zum Abisolieren von Leiterenden, mit einem einstückigen Zangenkörper (2), dessen hinterer Teil durch einen oberen und unbeweglichen Handgriff (3) gebildet und dessen vorderer Teil in Form einer feststehenden Klemmbacke (4) ausgebildet ist, mit einer am Zangenkörper (2) schwenkbar gelagerten und der feststehenden Klemmbacke (4) gegenüber liegenden beweglichen Klemmbacke (5), mit einer mit einem Antriebsteil (6) einstückig verbundenen und über das Antriebsteil (6) sowie einen Lagerzapfen (8) schwenkbar am Zangenkörper (2) gelagerten unteren Handgriff (7), mit einem durch das Antriebsteil (6) betätigbaren und die bewegliche Klemmbacke (5) antreibenden Kniegelenk (9) sowie mit einem zwischen den Klemmbacken (4, 5) liegenden Paar von mit Schneidmessem (11) versehenen Schneidbacken (12, 13), welche einstückig mit einem Zugelement (140) verbunden sind und welche bei Betätigung der Zange (1) in einer ersten Phase in den Isoliermantel eines Leiters einschneiden und in einer zweiten Phase den abgeschnittenen Endbereich des Isoliermantels vom Leiterende abziehen, wobei die Abzugsbewegung durch das vom Kniegelenk (9) beaufschlagte Zugelement (140) ausgeführt wird, wobei die Abzugsbewegung durch eine Steuereinrichtung (130, 15) wegabhängig gesteuert und damit eine definierte Abzugslänge sichergestellt ist.

## Beschreibung

Die vorliegende Erfindung betrifft eine Zange mit einer Abisolierstation zum Abisolieren von Leiterenden mit einem einstückigen Zangenkörper, dessen hinterer Teil durch einen oberen und unbeweglichen Handgriff gebildet und dessen vorderer Teil in Form einer feststehenden Klemmbacke ausgebildet ist, mit einer am Zangenkörper schwenkbar gelagerten und der feststehenden Klemmbacke gegenüber liegenden beweglichen Klemmbacke, mit einem mit einem Antriebsteil einstückig verbundenen und über das Antriebsteil sowie einen Lagerzapfen schwenkbar am Zangenkörper gelagerten unteren Handgriff, mit einem durch das Antriebsteil betätigbaren und die bewegliche Klemmbacke antreibenden Kniegelenk sowie mit einem zwischen den Klemmbacken liegenden Paar von mit Schneidmessem ausgestatteten Schneidbacken, welche einstückig mit einem Zugelement verbunden sind und welche bei Betätigung der Zange in einer ersten Phase in den Isoliermantel eines Leiters einschneiden und in einer zweiten Phase den abgeschnittenen Endbereich des Isoliermantels vom Leiterende abziehen, wobei die Abzugsbewegung durch das vom Kniegelenk beaufschlagte Zugelement ausgeführt wird.

Eine Zange mit den Merkmalen des Gattungsbegriffes ist aus der EP 0 562 229 B 1 bekannt.

Die in dieser Literaturstelle beschriebene Zange weist noch weitere Bearbeitungsstationen zum Bearbeiten von Leiterenden auf, beispielsweise eine Crimpstation und eine Schneidvorrichtung zum Durchtrennen von elektrischen Leitern.

Derartige Zangen haben sich in der Praxis grundsätzlich bewährt.

Bei der vorbekannten Zange wirkt die Arbeitsstation zum Abisolieren von Leiterenden letztlich kraftabhängig. Über die Handhebel, das Kniegelenk und die bewegliche Klemmbacke wird zunächst eine Klemmkraft zum Einklemmen eines Leiterendes aufgebracht und die Kraft anschließend so weit gesteigert, bis die Isolation eingeschnitten ist.

Im weiteren Ablauf wird dann die Isolation abgezogen, wobei die Abzugslänge bei der bekannten Zange aufgrund der Reibung innerhalb der gesamten Arbeitsstation letztlich nicht präzise definiert ist.

Der vorliegenden Erfindung liegt deshalb die Aufgabe zugrunde, eine Zange der gattungsgemäßen Art dahingehend weiter zu entwickeln, daß eine genau definierte Abisolierlänge erreicht wird.

Diese Aufgabe wird erfindungsgemäß dadurch gelöst, daß die Abzugsbewegung durch eine Steuereinrichtung wegabhängig gesteuert und damit eine definierte Abisolierlänge sichergestellt ist.

Störungen beim Abisolieren von Leiterenden durch nicht vollständig vom Leiter abgezogene, abgeschnittene Isoliermantelstücke sind somit sicher vermieden.

Eine besonders einfach realisierbare Form einer Steuereinrichtung besteht darin, daß die Steuereinrichtung aus einer an der beweglichen Klemmbacke vorgesehenen Steuerkurve und einem an einem Gelenkhebel des Kniegelenkes angeformten und auf der Steuerkurve geführten Steuemocken besteht.

Die Steuereinrichtung besteht somit aus rein mechanischen und preiswert herstellbaren und die Kosten einer derartigen Zange praktisch nicht erhöhenden Mitteln. Außerdem ist eine derartige Steuereinrichtung auch im harten Alltagsbetrieb dauerhaft funktionsfähig.

Ein Ausführungsbeispiel der Erfindung ist in den beigefügten Zeichnungen dargestellt und wird im folgenden näher beschrieben.

Es zeigen:

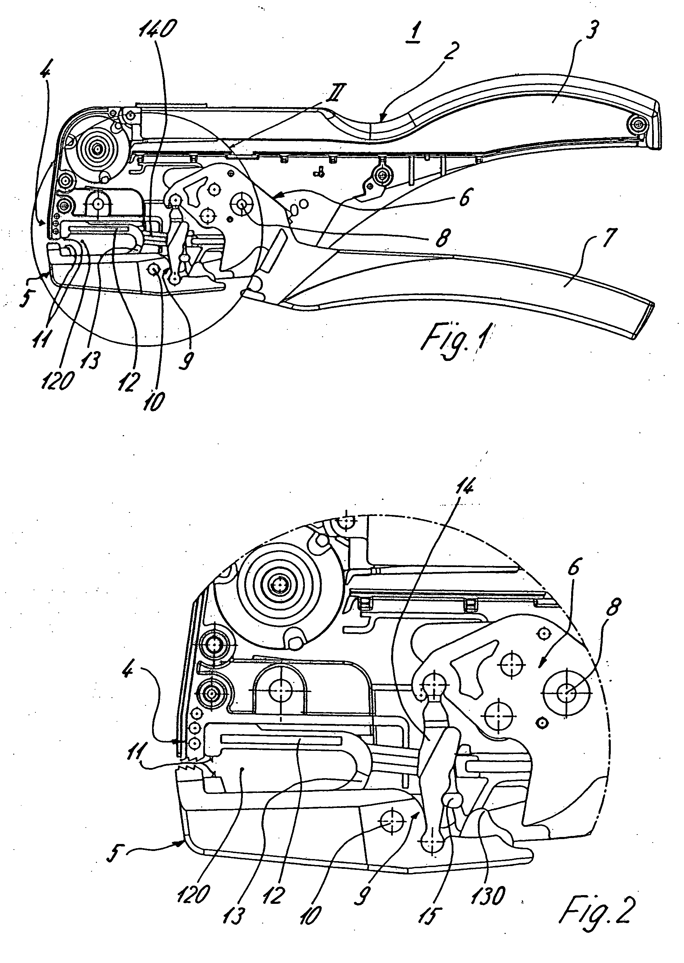

- Figur 1: eine Schnittdarstellung einer erfindungsgemäßen Zange im geöffneten Zustand.,
- Figur 1: die in Figur 1 mit II bezeichnete Einzelheit in vergrößerter Darstellung,
- Figur 3: einen Schnitt durch die erfindungsgemäße Zange in einer Betätigungs-Zwischenposition,
- Figur 4: die in Figur 3 mit IV bezeichnete Einzelheit in vergrößerter Darstellung,
- Figur 5: einen Schnitt durch die erfindungsgemäße Zange in der Endposition eines Arbeitstaktes,

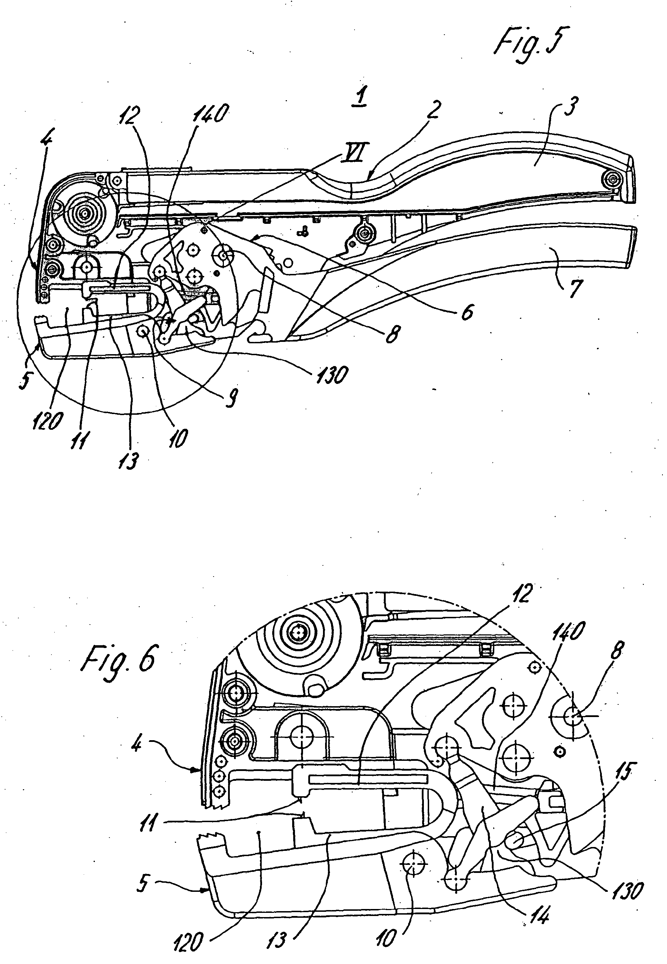

- Figur 6: die in Figur 5 mit VI bezeichnete Einzelheit in vergrößerter Darstellung.

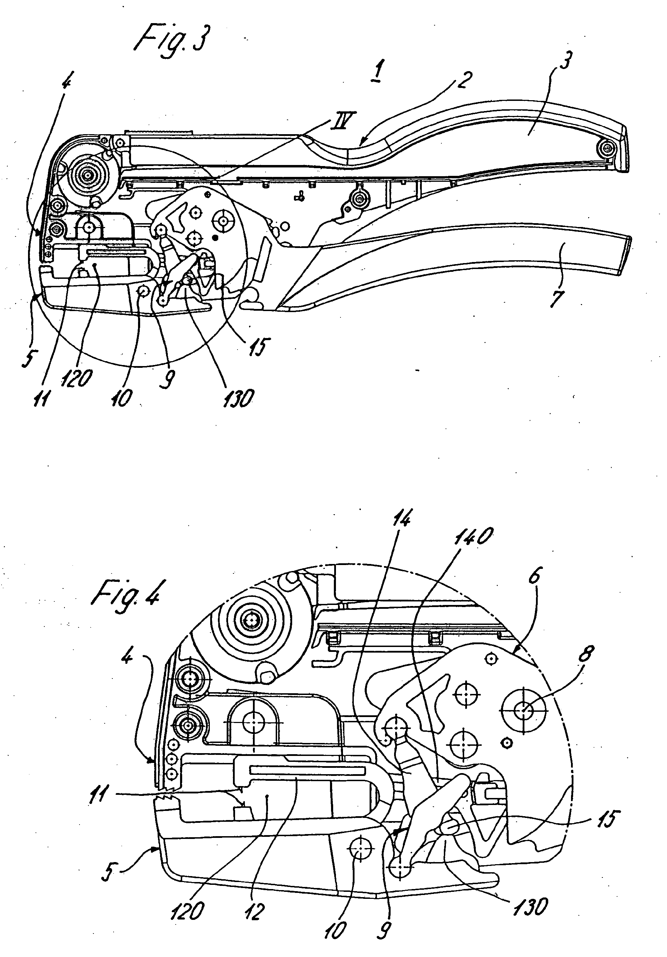

In den Figuren 1, 3 und 5 ist jeweils in einem schematischen Längsschnitt eine erfindungsgemäße und insgesamt mit dem Bezugszeichen 1 bezeichnete Zange dargestellt, welche einen einstückigen Zangenkörper 2 aufweist, dessen hinterer Teil durch einen oberen und unbeweglichen Handgriff 3 gebildet und dessen vorderer Teil in Form einer feststehenden Klemmbacke 4 ausgebildet ist.

Am Zangenkörper 2 ist unterhalb der feststehenden Klemmbacke 4 eine weitere Klemmbacke 5 schwenkbar gelagert.

Weiterhin ist am Zangenkörper 2 ein mit einem Antriebsteil 6 einstückig verbundener unterer Handgriff 7 schwenkbar gelagert. Dabei erfolgt die schwenkbare Lagerung über einen Lagerzapfen 8, der das Antriebsteil 6 und den Zangenkörper 2 durchtritt.

Über das Antriebsteil 6 und ein hierdurch betätigbares Kniegelenk 9 ist die bewegliche Klemmbacke 5 im Sinne einer Kipp- oder Schwenkbewegung um einen Lagerstift 10 antreibbar.

Zwischen der feststehenden Klemmbacke 4 und der beweglichen Klemmbacke 5 sind mit Schneidmessern 11 versehene Schneidbacken 12 und 13 längsverschiebbar geführt, wobei die Schneidbacken 12 und 13 einstückig mit einem langgestreckten Zugelement 14 verbunden sind, welches bei Betätigung der Zange 1, also beim Zusammendrücken der Handgriffe 3 und 7, durch das dabei in Richtung der beiden Handgriffe 3 und 7 nach hinten durchschlagende Kniegelenk 9 nach hinten, also in Richtung der beiden Handgriffe 3 und 7, bewegt wird. Entsprechend verschieben sich dabei die Schneidbacken 12 und 13 in der gleichen Richtung.

Wird die Zange 1 durch Freigabe der beiden Handgriffe 3 und 7 aus dieser Endstellung heraus wieder geöffnet, so bewegt sich das Zugelement 140 und damit auch die Schneidbacken 12 und 13 aufgrund der Wirkung der angesprochenen Feder wieder in seine vordere Ausgangsstellung.

Zwischen den Klemmbacken 4 und 5 sowie den Schneidbacken 12 und 13 ist ein Aufnahmeraum 120 gebildet, in den im geöffneten Zustand der Zange 1 das Ende eines elektrischen Leiters einführbar ist. Wird nach dem Einführen eines Leiterendes in diesen Aufnahmeraum 120 die Zange 1 durch Zusammendrücken der beiden Handgriffe 3 und 7 betätigt, wird zunächst das Leiterende zwischen den Klemmbacken 4 und 5 festgeklemmt., anschließend schneiden die Schneidmesser 11 der Schneidbacken 12 und 13 die Isolierung oder den Isoliermantel des Leiterendes ein und der abgeschnittene Isoliermantelbereich wird beim endgültigen Zusammendrücken der Handgriffe 3 und 7 durch die vorher beschriebene Abzugsbewegung der beiden Schneidbacken 12 und 13 in Richtung der beiden Handgriffe 3 und 7 vom Leiter abgezogen.

Insofern bilden die Klemmbacken 4 und 5 sowie die Schneidbacken 12 und 13 mit ihren Schneidmessern 11 eine Abisolierstation zum Abisolieren von Leiterenden.

Diese vorstehend beschriebene Funktion einer Zange 1 ist grundsätzlich auch aus der EP 0 562 229 B1 bekannt und bezüglich der hierbei ablaufenden Funktionen detailliert beschrieben, weshalb an dieser Stelle auf diese Druckschrift noch einmal ausdrücklich hingewiesen wird.

Über die Gestaltung der bekannten Zange hinausgehend ist bei der erfindungsgemäßen Zange 1 an der beweglichen Klemmbacke 5 eine Steuerkurve 130 vorgesehen. Ein mit dem Antriebsteil 6 zusammenwirkender Kniehebel 14 des Kniegelenkes 9 ist an seinem unteren, der Steuerkurve 130 zugewandten Ende mit einem Steuernocken 15 ausgestattet. Dieser Steuernocken 15 wird über die Steuerkurve 130 geführt und die Gestaltung der Steuerkurve 130 ist so ausgewählt, daß das Kniegelenk 9 erst dann wieder öffnen kann, wenn die gesamte Verschwenkbewegung der beiden Handgriffe 3 und 7 relativ zueinander ausgeführt ist.

Somit ergibt sich für die Verschiebebewegung der beiden Schneidbacken 12 und 13, die gleichbedeutend ist mit einer Abzugsbewegung für das Abziehen eines durchschnittenen Isoliermantelbereiches an einem Leiterende, eine definierte Abisolierlänge. Die Abzugsbewegung ist dabei aufgrund der Steuerkurve 130 und des damit zusammenwirkenden Steuernockens 15 wegabhängig gesteuert und nicht von der Reibung innerhalb des Systems abhängig.

Vorteilhafterweise ist die Steuerkurve 130 einstückig an die bewegliche Klemmbacke 5 angeformt. Alternativ hierzu ist es grundsätzlich aber auch denkbar, die Steuerkurve 130 als separates Bauteil herzustellen und in beliebiger Weise fest mit der beweglichen Klemmbacke 5 zu verbinden. Dies bringt insbesondere den Vorteil, daß auch vorhandene Zangen entsprechend nachgerüstet werden können.

In den Figuren 1, 3 und 5 sowie den jeweils zugehörigen Detail-Darstellungen 2, 4 und 6 sind in der genannten Reihenfolge die Ausgangsposition oder die Ruhestellung der Zange 1 eine Zwischenposition und die Endstellung bei einem Abisoliervorgang dargestellt.

## Patentansprüche

1. Zange (1) mit einer Abisolierstation zum Abisolieren von Leiterenden, mit einem einstückigen Zangenkörper (2), dessen hinterer Teil durch einen oberen und unbeweglichen Handgriff (3) gebildet und dessen vorderer Teil in Form einer feststehenden Klemmbacke (4) ausgebildet ist, mit einer am Zangenkörper (2) schwenkbar gelagerten und der feststehenden Klemmbacke (4) gegenüber liegenden beweglichen Klemmbacke (5), mit einer mit einem Antriebsteil (6) einstückig verbundenen und über das Antriebsteil (6) sowie einen Lagerzapfen (8) schwenkbar am Zangenkörper (2) gelagerten unteren Handgriff (7), mit einem durch das Antriebsteil (6) betätigbaren und die bewegliche Klemmbacke (5) antreibenden Kniegelenk (9) sowie mit einem zwischen den Klemmbacken (4, 5) liegenden Paar von mit Schneidmessern (11) versehenen Schneidbacken (12, 13), welche einstückig mit einem Zugelement (140) verbunden sind und welche bei Betätigung der Zange (1) in einer ersten Phase in den Isoliermantel eines Leiters einschneiden und in einer zweiten Phase den abgeschnittenen Endbereich des Isoliermantels vom Leiterende abziehen, wobei die Abzugsbewegung durch das vom Kniegelenk (9) beaufschlagte Zugelement (140) ausgeführt wird, **dadurch gekennzeichnet, daß** die Abzugsbewegung durch eine Steuereinrichtung (130, 15) wegabhängig gesteuert und damit eine definierte Abzugslänge sichergestellt ist.

2. Zange nach Anspruch 1, **dadurch gekennzeichnet, daß** die Steuereinrichtung aus einer von der beweglichen Klemmbacke (5) vorgesehenen Steuerkurve und einem an einem Gelenkhebel (14) des Kniegelenkes (9) angeformten und auf der Steuerkurve (130) geführten Steuernocken (15) besteht.

3. Zange nach Anspruch 1 oder 2, **dadurch gekennzeichnet, daß** die Steuerkurve (130) einstückig an die bewegliche Klemmbacke (5) angeformt ist.

4. Zange nach Anspruch 1 oder 2, **dadurch gekennzeichnet, daß** die Steuerkurve (130) als separates Bauteil hergestellt und fest mit der beweglichen Klemmbakke (5) verbunden ist.
